# EUROPEAN PATENT APPLICATION

(11) **EP 2 950 184 A1**
(43) Date of publication of application: **02.12.2015**
(21) Application number: 13873036.1
(22) Date of filing: 29.11.2013
(51) Int. Cl.: G06F 3/02

(54) **INPUT METHOD AND APPARATUS OF CIRCULAR TOUCH KEYBOARD**

(30) Priority: 25.01.2013 CN 201310028778
(71) Applicant: Hu, Jingtao, Guangdong 523221 (CN)
(72) Inventor: Hu, Jingtao, Guangdong 523221 (CN)
(74) Representative: Butaye, Nicolas
(86) International application number: PCT/CN2013/088110
(87) International publication number: WO 2014/114133

(57) **Abstract**

Disclosed is a typing method for a circular touch-sensitive keyboard, comprising detecting (S100, S200, S300, S400) a user's touch data on the circular touch-sensitive keyboard to initiate a pre-input state based on the touch data; detecting (S101, S201, S301, S401) the user's swipe input data on the circular touch-sensitive keyboard; obtaining (S102, S202, S402) a character corresponding to the swipe input data; and outputting (S104, S204) the character; wherein the circular touch-sensitive keyboard comprises an inner key zone (a5) and an outer key area, the outer key area comprises eight outer key zones (a1, a2, a3, a7, a8), the inner key zone (a5) comprises eight sectors, each outer key zone (a1, a2, a3, a7, a8) comprises four sectors, each sector is assigned with a particular character, the circular touch-sensitive keyboard is provided with an input module (2) for detecting the swipe input data. Also disclosed is a typing device for a circular touch-sensitive keyboard. The typing method and typing device of the present invention can increase typing speed.

## Description

### FIELD OF THE INVENTION

The present invention relates to electronic information field, especially to a typing method and typing device for a circular touch-sensitive keyboard.

### BACKGROUND OF THE INVENTION

Keyboards, derived from typewriters in the early 19^{th} century, remain central to human-computer interaction to the present. With the development of personal computers, a QWERTY keyboard, which improves typing speed, has become the most widely-used keyboard for typing. However, due to a large typing area of the QWERTY keyboard, the QWERTY keyboard is not suitable for small-sized mobile phones, so various typing methods have been developed for mobile phones. One of the most popular typing methods is T9 Text Input method, which utilizes nine keys and thus requires a relatively small typing area. Nevertheless, T9 keyboard has a keyboard layout that is completely different from that of the familiar QWERTY keyboard, which may bring great inconveniences to users. In addition, T9 keyboard users usually have difficulties in typing special words or characters because T9 Text Input method relies heavily on the predictive function of a dictionary database.

### SUMMARY OF THE INVENTION

Implementations discussed herein are directed to a typing method and typing device for a circular touch-sensitive keyboard, the typing method and typing device are applicable in a touch-sensitive input panel and a touch-sensitive display screen.

One embodiment is directed to a typing method for a circular touch-sensitive keyboard, comprising detecting a user's touch data on the circular touch-sensitive keyboard to initiate a pre-input state based on the touch data; detecting the user's swipe input data on the circular touch-sensitive keyboard; obtaining a character corresponding to the swipe input data; and outputting the character; wherein the circular touch-sensitive keyboard comprises an inner key zone and an outer key area, the outer key area comprises eight outer key zones, the inner key zone comprises eight sectors, each outer key zone comprises four sectors, each sector is assigned with a particular character, the circular touch-sensitive keyboard is provided with an input module for detecting the swipe input data on the inner key zone and outer key zones of the circular touch-sensitive keyboard.

Preferably, the typing method further comprises the following steps after the step of detecting the user's swipe input data on the circular touch-sensitive keyboard: judging whether a correction-and-prediction mode is turned on or not; obtaining candidate words and priority weights of the candidate words corresponding to the swipe input data when the correction-and-prediction mode is turned on; displaying the candidate words in real time based on the priority weights of the candidate words; and outputting a word selected by the user.

Preferably, the step of obtaining candidate words and priority weights of the candidate words corresponding to the swipe input data when the correction-and-prediction mode is turned on comprises: obtaining a character set corresponding to the swipe input data, the character set comprising characters and correction weighs of the characters corresponding to the swipe input data; seeking the candidate words based on the characters in the character set, obtaining usage-frequency weights of the candidate words; and generating the priority weights of the candidate words based on the usage-frequency weights of the candidate words and the correction weighs of the characters.

Preferably, the typing method further comprises the following step after the step of obtaining the character corresponding to the swipe input data: displaying the character.

Another embodiment is directed to a typing device for a circular touch-sensitive keyboard, comprising: a pre-input module, the pre-input module detecting a user's touch data on the circular touch-sensitive keyboard and initiating a pre-input state based on the touch data; an input module connected to the pre-input module, the input module detecting the user's swipe input data on the circular touch-sensitive keyboard; a layout-and-mapping module connected to the input module, the layout-and-mapping module obtaining a character corresponding to the swipe input data; and a first output module connected to the layout-and-mapping module, the first output module outputting the character.

Preferably, the typing device further comprises: a judging module connected to the input module, the judging module judging whether a correction-and-prediction mode is turned on or not; a correction-and-prediction module connected to the judging module, the correction-and-prediction module obtaining candidate words and priority weights of the candidate words corresponding to the swipe input data when the correction-and-prediction mode is turned on; a second display module connected to the correction-and-prediction module, the second display module displaying the candidate words in real time based on the priority weights of the candidate words; and a second output module connected to the second display module, the second output module outputting a word selected by the user.

Preferably, the correction-and-prediction module comprises: a correction module, the correction module obtaining a character set corresponding to the swipe input data, the character set comprising characters and correction weighs of the characters corresponding to the swipe input data; a dictionary module, the dictionary module seeking the candidate words based on the characters in the character set and obtaining usage-frequency weights of the candidate words; and a candidate module connected to the correction module and the dictionary module, the candidate module generating the priority weights of the candidate words based on the usage-frequency weights of the candidate words and the correction weighs of the characters.

Preferably, the typing device further comprises: a first display module connected to the first output module and the layout-and-mapping module, the first display module displaying the character.

The typing method and typing device of the present invention have the following advantages.

The typing method for a circular touch-sensitive keyboard of the present invention makes typing both fast and intuitive. The circular touch-sensitive keyboard comprises an inner key zone and an outer key area, the outer key area comprises eight outer key zones, the inner key zone comprises eight sectors, each outer key zone comprises four sectors, each sector is assigned with a particular character, the circular touch-sensitive keyboard is provided with an input module for detecting swipe input data on the inner key zone and outer key zones of the circular touch-sensitive keyboard, such that a total of forty characters can be output by the circular touch-sensitive keyboard. The typing method for the circular touch-sensitive keyboard comprises: detecting a user's touch data on the circular touch-sensitive keyboard to initiate a pre-input state based on the touch data; detecting the user's swipe input data on the circular touch-sensitive keyboard; obtaining a character corresponding to the swipe input data; and outputting the character. Through these steps, the user may input text very fast.

In addition, the typing method for the circular touch-sensitive keyboard further comprises: judging whether a correction-and-prediction mode is turned on or not; obtaining candidate words and priority weights of the candidate words corresponding to the swipe input data when the correction-and-prediction mode is turned on; displaying the candidate words in real time based on the priority weights of the candidate words; and outputting a word selected by the user. Through these steps, the user's input speed and accuracy are greatly improved.

### BRIEF DESCRIPTION OF THE DRAWINGS

Fig. 1 is a flow chart illustrating a typing method for a circular touch-sensitive keyboard in accordance with a first embodiment of the present invention;
Fig. 2 is a flow chart illustrating a typing method for a circular touch-sensitive keyboard in accordance with a second embodiment of the present invention;
Fig. 3 is a flow chart illustrating a typing method for a circular touch-sensitive keyboard in accordance with a third embodiment of the present invention;
Fig. 4 is a flow chart illustrating a typing method for a circular touch-sensitive keyboard in accordance with a fourth embodiment of the present invention;
FIG. 5 is a schematic illustration of a typing device for a circular touch-sensitive keyboard of the present invention;
FIG. 6 is a schematic illustration of a correction-and-prediction module 7 of a typing device for a circular touch-sensitive keyboard of the present invention;
FIG. 7 is a schematic illustration of a circular touch-sensitive keyboard of the present invention;
FIG. 8 is another schematic illustration of a circular touch-sensitive keyboard of the present invention;
FIG. 9 is another schematic illustration of a circular touch-sensitive keyboard of the present invention;
FIG. 10 is another schematic illustration of a circular touch-sensitive keyboard of the present invention;
FIG. 11 is another schematic illustration of a circular touch-sensitive keyboard of the present invention;
FIG. 12 is another schematic illustration of a circular touch-sensitive keyboard of the present invention;
FIG. 13 shows another schematic illustration of a circular touch-sensitive keyboard of the present invention;
FIG. 14 shows a circular touch-sensitive keyboard in a typing state;
FIG. 15 shows a circular touch-sensitive keyboard in another typing state.

### DETAILED DESCRIPTION OF THE INVENTION

Various preferred embodiments will now be described with reference to the figures.

The present invention provides a typing device for a circular touch-sensitive keyboard, the circular touch-sensitive keyboard can be any element having certain key zones for input operations. The circular touch-sensitive keyboard may be a keyboard hardware, a keyboard software on a touch-sensitive screen, a touch-sensitive input panel, and so on.

The circular touch-sensitive keyboard comprises an inner key zone and an outer key area, the outer key area comprises eight outer key zones. The inner key zone comprises eight sectors, while each outer key zone comprises four sectors. Each sector is assigned with a particular character. The circular touch-sensitive keyboard is provided with an input module for detecting a user's swipe input data on the inner key zone and outer key zones of the circular touch-sensitive keyboard, such that a total of forty characters can be output by the circular touch-sensitive keyboard.

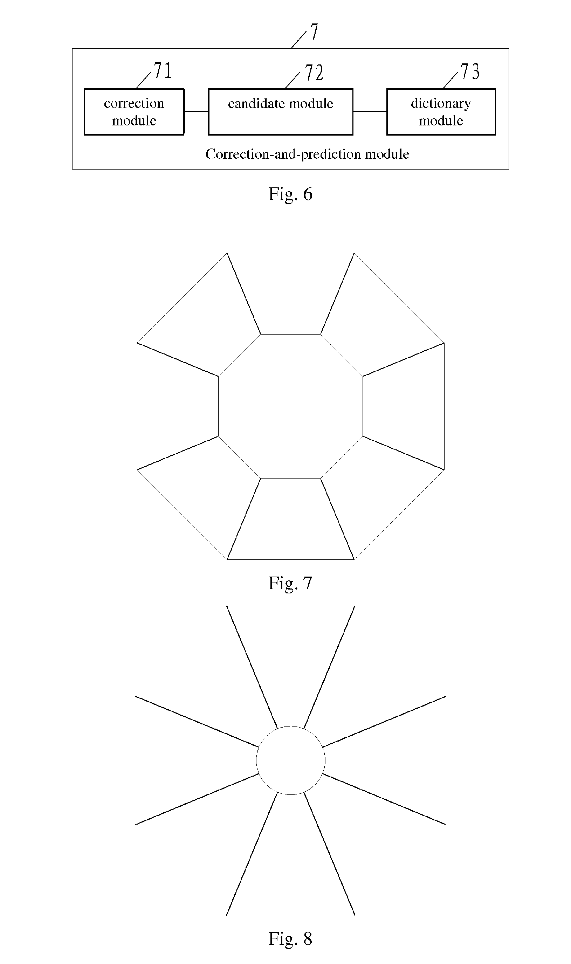

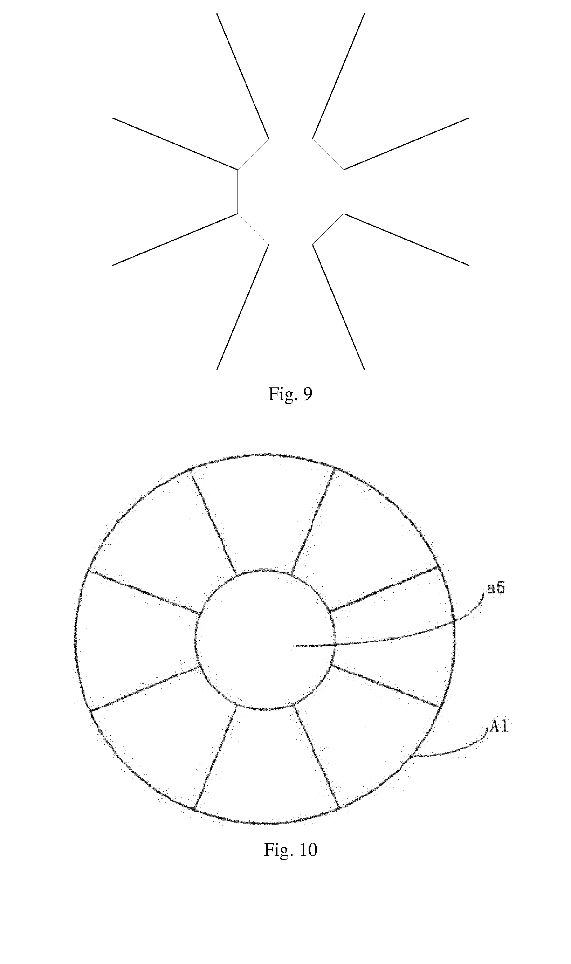

It should be understood that the typing method and the typing device of the present invention both are based on the circular touch-sensitive keyboard. The circular touch-sensitive keyboard may be designed with a circular edge as shown in FIG. 10, or with an octagonal edge as shown in FIG. 7. The circular touch-sensitive keyboard may also be designed with a 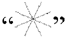 shape as shown in FIG. 8 and FIG. 9. The typing method and the typing device of the present invention will now be described with reference to FIG. 10.

FIG. 10 shows a circular touch-sensitive keyboard comprising an inner key zone a5 and an outer key area A1, wherein the inner key zone a5 comprises eight sectors, the outer key area A1 comprises eight outer key zones with each outer key zone comprising four sectors, each sector is assigned with a particular character. The particular character may be a written character or control character. The circular touch-sensitive keyboard is provided with an input module for detecting a user's swipe input data on the inner key zone and outer key zones of the circular touch-sensitive keyboard.

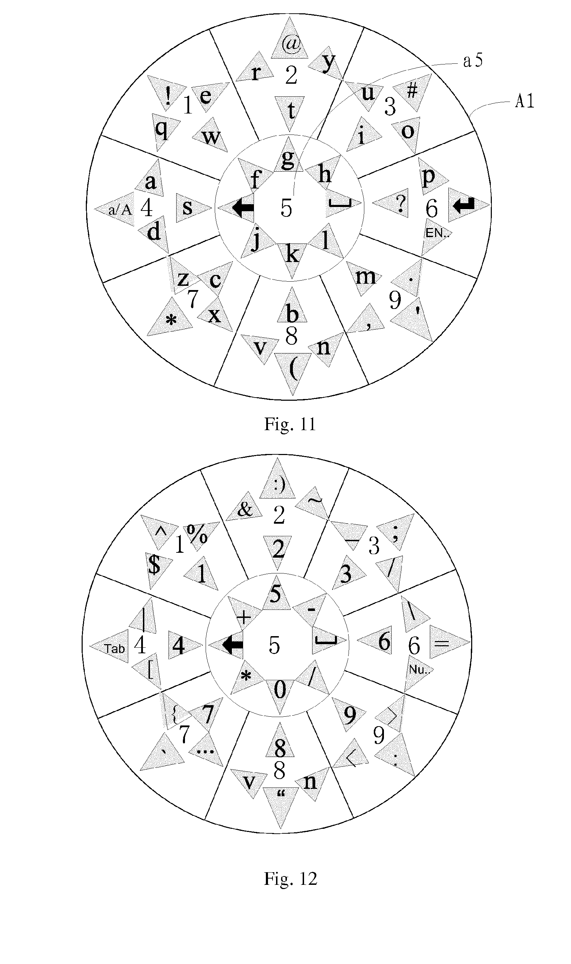

Referring to FIG. 11, FIG. 11 shows the layout of characters on the sectors when typing English text.

Referring to FIG. 12, FIG. 12 shows the layout of characters on the sectors when typing numbers.

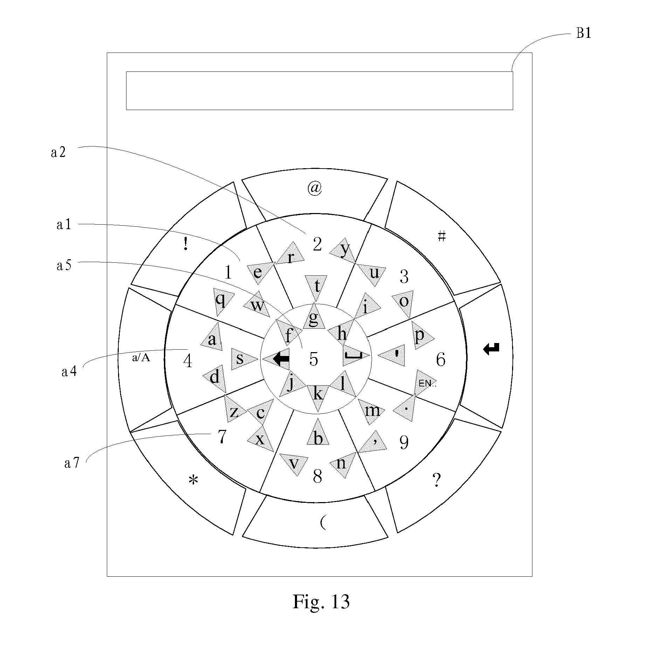

Referring to FIG. 13, peripheral sectors of the sectors of the outer key zones can be separated so as to increase the visualized space of the outer key zones and thus improve typing speed. So the typing method and the typing device of the present invention will now be described in detail with reference to FIG. 13.

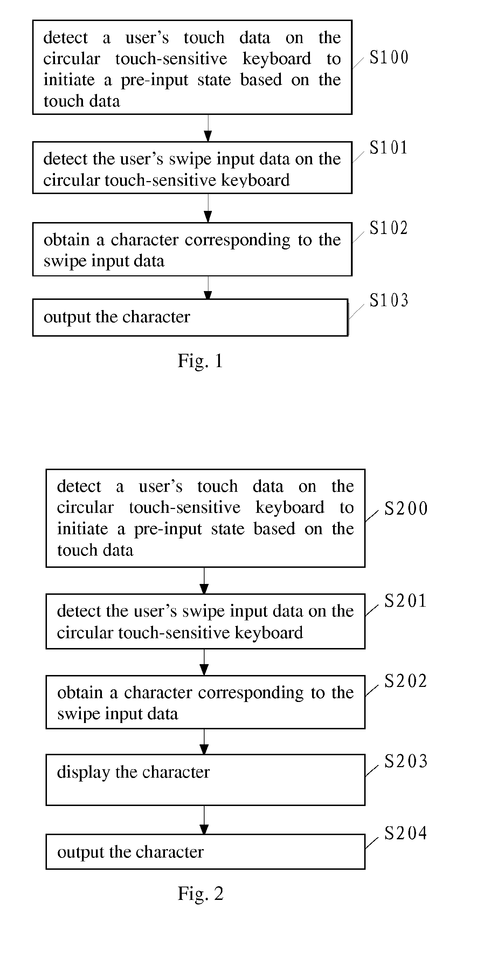

Referring to FIG. 1, FIG. 1 is a flow chart illustrating a typing method for a circular touch-sensitive keyboard in accordance with a first embodiment of the present invention. The typing method comprises the following four steps from **S100** to **S103.**

**S100** detect a user's touch data on the circular touch-sensitive keyboard to initiate a pre-input state based on the touch data.

In the step S100, the touch data refers to coordinate data of a user's touch operation on the circular touch-sensitive keyboard. When typing, user does a touch operation on the circular touch-sensitive keyboard to initiate a pre-input state. In the pre-input state, the touched key zone is highlighted, besides, characters corresponding to all swipe input operations starting from the touched key zone are also highlighted so as to provide a visual indication of swipe directions to the user, each swipe direction starting from the touched key zone corresponding to a particular character.

For example, as shown in FIG. 13, when a user does a touch operation on an outer key zone a4, the outer key zone a4 and four characters corresponding to four swipe input operations starting from the outer key zone a4 are highlighted.

**S101** detect the user's swipe input data on the circular touch-sensitive keyboard.

When the user swipes on the circular touch-sensitive keyboard through his finger or by using a stylus from a key zone assigned with a character that the user intends to type, the user's swipe input data is detected, wherein the swipe input data refers to a swipe path on the circular touch-sensitive keyboard.

For example, as shown in FIG. 13, the user may swipe his finger from the outer key zone a4 towards an inner key zone a5, or towards an outer key zone a7 or towards an outer key zone a1.

**S102** obtain a character corresponding to the swipe input data.

After the swipe input data (i.e., the swipe path on the circular touch-sensitive keyboard) is detected, the swipe input data is compared with a layout coordinate provided by the circular touch-sensitive keyboard to judge whether the swipe input is effective or not and then obtain a character corresponding to the swipe input data if the swipe input is effective.

For example, as shown in FIG. 13, a written character "s" is obtained when the user swipes his finger from the outer key zone a4 towards the inner key zone a5; a written character "d" is obtained when the user swipes his finger from the outer key zone a4 towards the outer key zone a7; and a written character "a" is obtained when the user swipes his finger from the outer key zone a4 towards the outer key zone a1. In addition, a control character "a/A" (i.e., an uppercase-lowercase switch symbol) is obtained when the user swipes his finger from the outer key zone a4 towards a peripheral sector of the outer key zone a4.

**S103** output the character.

The obtained character is displayed in a color-inverted manner in an output window B1 when the user's finger or stylus is in still contact with the circular touch-sensitive keyboard during the swipe input operation; the obtained character is then output once the user's finger or stylus is released from the circular touch-sensitive keyboard.

In operation, the typing method for the circular touch-sensitive keyboard in accordance with the first embodiment of the present invention comprises: detecting a user's touch data on the circular touch-sensitive keyboard to initiate a pre-input state in which the touched key zone and characters corresponding to all swipe input operations starting from the touched key zone are highlighted to provide a visual indication of swipe directions to the user, each swipe direction starting from the touched key zone corresponding to a particular character; detecting the user's swipe input data on the circular touch-sensitive keyboard; obtaining a character corresponding to the swipe input data; and outputting the character.

By way of example, referring to FIG. 13, when a user intends to type a character "g", the user firstly touches an inner key zone a5 on the circular touch-sensitive keyboard through his finger to initiate a pre-input state in which the touched inner key zone a5 and eight characters corresponding to eight swipe input operations starting from the touched inner key zone a5 towards neighbouring outer key zones are highlighted; secondly the user swipes his finger from the inner key zone a5 towards an outer key zone a2 to produce swipe input data which is then detected for obtaining a character "g" corresponding to the swipe input data; and thirdly the user releases his finger from the circular touch-sensitive keyboard to output the character "g".

Referring to FIG. 2, FIG. 2 is a flow chart illustrating a typing method for a circular touch-sensitive keyboard in accordance with a second embodiment of the present invention. The typing method comprises the following five steps from S200 to **S204.**

**S200** detect a user's touch data on the circular touch-sensitive keyboard to initiate a pre-input state based on the touch data.

In the step S200, the touch data refers to coordinate data of a user's touch operation on the circular touch-sensitive keyboard. When typing, the user does a touch operation on the circular touch-sensitive keyboard to initiate a pre-input state. In the pre-input state, the touched key zone is highlighted, besides, characters corresponding to all swipe input operations starting from the touched key zone are also highlighted so as to provide a visual indication of swipe directions to the user, each swipe direction starting from the touched key zone corresponding to a particular character.

**S201** detect the user's swipe input data on the circular touch-sensitive keyboard.

The swipe input data refers to a swipe path on the circular touch-sensitive keyboard.

**S202** obtain a character corresponding to the swipe input data.

In the step S202, the swipe input data is compared with a layout coordinate provided by the circular touch-sensitive keyboard to obtain a character corresponding to the swipe input data.

**S203** display the character.

The obtained character is displayed in a color-inverted manner in an output window B1 when the user's finger or stylus is in still contact with the circular touch-sensitive keyboard during the swipe input operation.

**S204** output the character.

The obtained character is output in the output window B1 once the user's finger or stylus is released from the circular touch-sensitive keyboard.

In operation, the typing method for the circular touch-sensitive keyboard in accordance with the second embodiment of the present invention comprises: detecting a user's touch data on the circular touch-sensitive keyboard to initiate a pre-input state in which the touched key zone and characters corresponding to all swipe input operations starting from the touched key zone are highlighted to provide a visual indication of swipe directions to the user, each swipe direction starting from the touched key zone corresponding to a particular character; detecting the user's swipe input data on the circular touch-sensitive keyboard after the user does a swipe input operation on the circular touch-sensitive keyboard based on the visual indication; obtaining a character corresponding to the swipe input data by comparing the swipe input data with a layout coordinate provided by the circular touch-sensitive keyboard; displaying the obtained character in a color-inverted manner in an output window B1 when the user's finger or stylus is in still contact with the circular touch-sensitive keyboard during the swipe input operation; and outputting the obtained character in the output window B1 once the user's finger or stylus is released from the circular touch-sensitive keyboard.

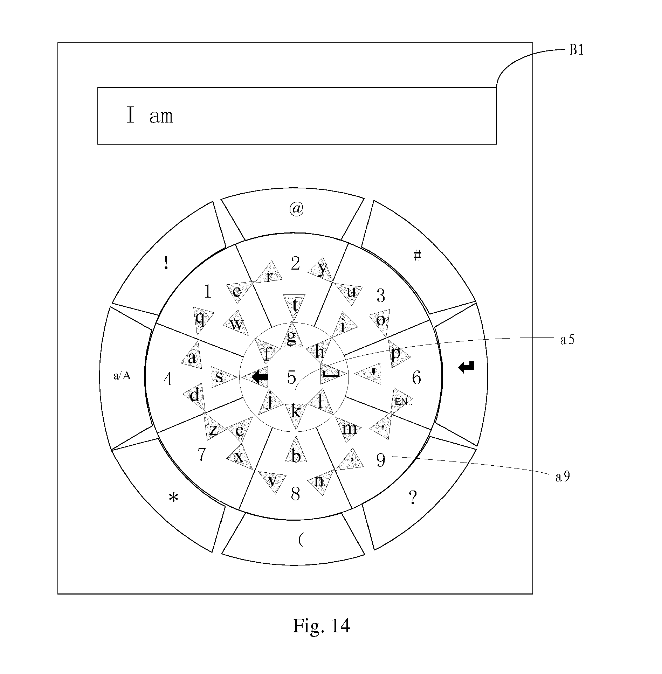

By way of example, referring to FIG. 14, when a user intends to type a character "m", the user firstly touches an outer key zone a9 on the circular touch-sensitive keyboard through his finger to initiate a pre-input state in which the touched outer key zone a9 and four characters corresponding to four swipe input operations starting from the touched outer key zone a9 are highlighted; secondly the user swipes his finger from the outer key zone a9 towards an inner key zone a5 to display the character "m" in a color-inverted manner in an output window B1; and thirdly the user releases his finger from the circular touch-sensitive keyboard to output the character "m".

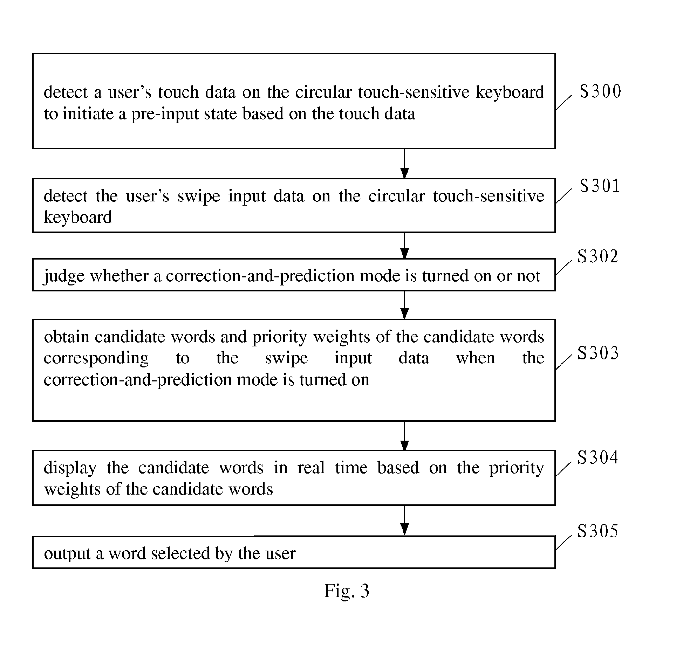

Referring to FIG. 3, FIG. 3 is a flow chart illustrating a typing method for a circular touch-sensitive keyboard in accordance with a third embodiment of the present invention. The typing method comprises the following six steps from **S300** to **S305.**

**S300** detect a user's touch data on the circular touch-sensitive keyboard to initiate a pre-input state based on the touch data.

In the step S300, the touch data refers to coordinate data of a user's touch operation on the circular touch-sensitive keyboard. When typing, user does a touch operation on the circular touch-sensitive keyboard to initiate a pre-input state. In the pre-input state, the touched key zone is highlighted, besides, characters corresponding to all swipe input operations starting from the touched key zone are also highlighted so as to provide a visual indication of swipe directions to the user, each swipe direction starting from the touched key zone corresponding to a particular character.

**S301** detect the user's swipe input data on the circular touch-sensitive keyboard.

The swipe input data refers to a swipe path on the circular touch-sensitive keyboard.

**S302** judge whether a correction-and-prediction mode is turned on or not.

In this step, a judgment about whether a correction-and-prediction mode is turned on or not is made to ascertain whether or not the correction-and-prediction mode will be applied.

**S303** obtain candidate words and priority weights of the candidate words corresponding to the swipe input data when the correction-and-prediction mode is turned on.

In this step, in order to obtain candidate words, a character set corresponding to the swipe input data is firstly obtained, the character set comprising characters and correction weights of the characters corresponding to the swipe input data. The correction weights of the characters assigned to a touched key zone are determined by comparing the distances from the terminal point of the swipe path to midpoints of other 8 key zones. The shorter the distance from the terminal point to the midpoint of a particular key zone is, the bigger the correction weight of a particular character corresponding to a swipe input operation from the touched key zone towards the particular key zone will be. Then based on the character set and characters that have already been typed, candidate words and usage-frequency weights of the candidate words can be obtained, wherein the usage-frequency weight of the candidate word refers to an usage-frequency percentage of the candidate word obtained from a word usage-frequency database. The priority weight of the candidate word is determined by the correction weight of the character and the usage-frequency weight of the candidate word, the bigger the number computed by multiplying together the correction weight of the character and the usage-frequency weight of the candidate word is, the higher the priority weight of the candidate word will be.

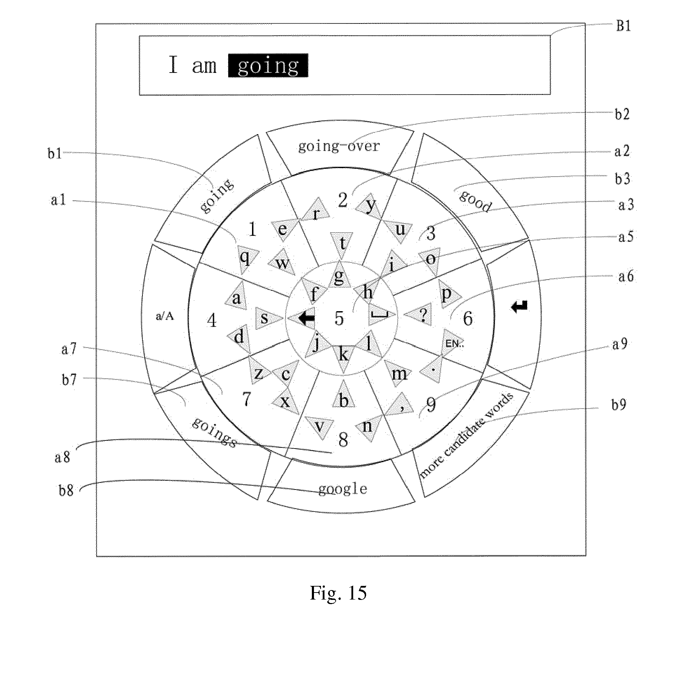

By way of example, referring to FIG. 15, when a user intends to type a word "going" and has already typed two characters "go", (according to the usage-frequency weights of words, the top five ranked words starting with "go" are "got", "good", "goes", "gone" and "going"), the user touches an outer key zone a3 to obtain a character set {"u", "i", "o"}, the user then swipes his finger from the outer key zone a3 towards an inner key zone a5 to obtain a biggest correction weight for the character "i", meanwhile the word "going" has a relatively big usage-frequency weight, therefore, the word "going" gets the highest priority weight.

**S304** display the candidate words in real time based on the priority weights of the candidate words.

Based on the priority weights of the candidate words, the candidate words are ranked in descending order. The top five ranked candidate words will be respectively displayed in peripheral sectors of outer key zones a1, a2, a3, a7 and a8. In the meantime, a pagedown-operation symbol is displayed in a peripheral sector b9 of an outer key zone a9 for showing next five candidate words.

By way of example, referring to FIG. 15, the top five ranked candidate words are "going", "going-on", "good", "goings" and "google", then the candidate word "going" is displayed in a peripheral sector b1, the candidate word "going-on" is displayed in a peripheral sector b2, the candidate word "good" is displayed in a peripheral sector b3, the candidate word "goings" is displayed in a peripheral sector b7, and the candidate word "google" is displayed in a peripheral sector b8.

**S305** output a word selected by the user.

When the user swipes on the circular touch-sensitive keyboard to select a candidate word he intends to type, the selected candidate word will be output. When swiping on the circular touch-sensitive keyboard to select the candidate word, the user may swipe from an outer key zone assigned with the candidate word he intends to type towards the peripheral sector of the outer key zone through his finger or by using a stylus. During swiping on the circular touch-sensitive keyboard to select the candidate word, the selected candidate word is displayed in a color-inverted manner in an output window B1 when the user's finger or stylus is in still contact with the circular touch-sensitive keyboard. The selected candidate word is then output once the user's finger or stylus is released from the circular touch-sensitive keyboard.

In addition, when the user intends to type a candidate word not in the top five ranked candidate words, the user may swipe from the outer key zone a9 towards the peripheral sector b9 of the outer key zone a9 so as to make a sixth-ranked candidate word, a seventh-ranked candidate word, a eighth-ranked candidate word, a ninth-ranked candidate word, and a tenth-ranked candidate word respectively displayed in the peripheral sector b1, the peripheral sector b2, the peripheral sector b3, the peripheral sector b7 and the peripheral sector b8. Other candidate words having relatively low priority weights can also be displayed in corresponding peripheral sectors through similar operations.

By way of example, referring to FIG. 15, when the user intends to type the candidate word "going", the user may swipe from the outer key zone a1 towards the peripheral sector b1 through his finger or by using a stylus. During swiping on the circular touch-sensitive keyboard to select the candidate word "going", the selected candidate word "going" is displayed in a color-inverted manner in an output window B1 when the user's finger or stylus is in still contact with the circular touch-sensitive keyboard. The selected candidate word "going" is then output once the user's finger or stylus is released from the circular touch-sensitive keyboard.

It should be noted that if the correction-and-prediction mode is not turned on, none of the steps S303, S304 and S305 will be done.

In operation, the typing method for the circular touch-sensitive keyboard in accordance with the third embodiment of the present invention comprises: detecting a user's touch data on the circular touch-sensitive keyboard to initiate a pre-input state based on the touch data; detecting the user's swipe input data on the circular touch-sensitive keyboard; judging whether a correction-and-prediction mode is turned on or not; obtaining candidate words and priority weights of the candidate words corresponding to the swipe input data when the correction-and-prediction mode is turned on; displaying the candidate words in real time based on the priority weights of the candidate words; and outputting a word selected by the user.

By way of example, referring to FIG. 15, when a user intends to type a word "going" and has already typed two characters "go", (according to the usage-frequency weights of words, the top five ranked words starting with "go" are "got", "good", "goes", "gone" and "going"), the user touches an outer key zone a3 to obtain a character set {"u", "i", "o"}, the user then swipes his finger from the outer key zone a3 towards an inner key zone a5 to obtain candidate words and to display the top five ranked candidate words based on the priority weights of the candidate words, specifically, the top five ranked candidate words "going", "going-on", "good", "goings" and "google" are respectively displayed in peripheral sectors b1, b2, b3, b7 and b8. During swiping from an outer key zone a1 towards the peripheral sector b1 to select the candidate word "going", the selected candidate word "going" is displayed in a color-inverted manner in an output window B1 when the user's finger or stylus is in still contact with the circular touch-sensitive keyboard. The selected candidate word "going" is then output once the user's finger or stylus is released from the circular touch-sensitive keyboard.

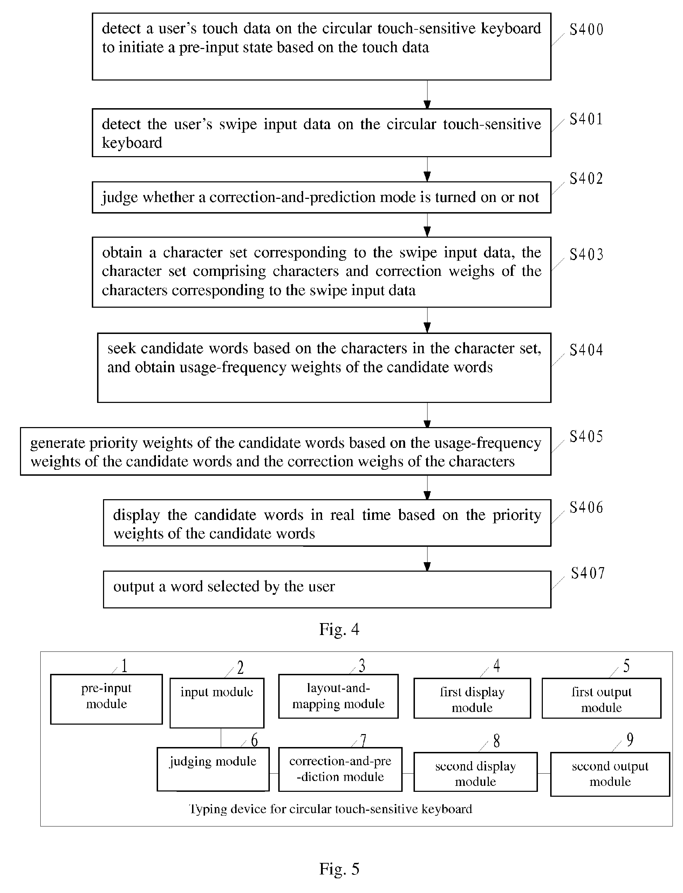

Referring to FIG. 4, FIG. 4 is a flow chart illustrating a typing method for a circular touch-sensitive keyboard in accordance with a fourth embodiment of the present invention. The typing method comprises the following eight steps from **S400** to **S407.**

**S400** detect a user's touch data on the circular touch-sensitive keyboard to initiate a pre-input state based on the touch data.

In the step S400, the touch data refers to coordinate data of a user's touch operation on the circular touch-sensitive keyboard. When typing, user does a touch operation on the circular touch-sensitive keyboard to initiate a pre-input state. In the pre-input state, the touched key zone is highlighted, besides, characters corresponding to all swipe input operations starting from the touched key zone are also highlighted so as to provide a visual indication of swipe directions to the user, each swipe direction starting from the touched key zone corresponding to a particular character.

**S401** detect the user's swipe input data on the circular touch-sensitive keyboard.

The swipe input data refers to a swipe path on the circular touch-sensitive keyboard.

**S402** judge whether a correction-and-prediction mode is turned on or not.

In this step, a judgment about whether a correction-and-prediction mode is turned on or not is made to ascertain whether or not the correction-and-prediction mode will be applied.

**S403** obtain a character set corresponding to the swipe input data, the character set comprising characters and correction weighs of the characters corresponding to the swipe input data.

In this step, a character set corresponding to the swipe input data is obtained, the character set comprising characters and correction weights of the characters corresponding to the swipe input data. The correction weights of the characters assigned to a touched key zone are determined by comparing the distances from the terminal point of the swipe path to midpoints of other 8 key zones. The shorter the distance from the terminal point to the midpoint of a particular key zone is, the bigger the correction weight of a particular character corresponding to a swipe input operation from the touched key zone towards the particular key zone will be.

By way of example, referring to FIG. 15, a user touches an outer key zone a3 to obtain a character set {"u", "i", "o"}, the user then swipes his finger from the outer key zone a3 towards an outer key zone a2 to obtain a biggest correction weight for the character "u".

**S404** seek candidate words based on the characters in the character set, and obtain usage-frequency weights of the candidate words.

In this step, the usage-frequency weight of the candidate word refers to an usage-frequency percentage of the candidate word obtained from a word usage-frequency database.

**S405** generate priority weights of the candidate words based on the usage-frequency weights of the candidate words and the correction weighs of the characters.

In this step, the priority weight of the candidate word is determined by the correction weight of the character and the usage-frequency weight of the candidate word, the bigger the number computed by multiplying together the correction weight of the character and the usage-frequency weight of the candidate word is, the higher the priority weight of the candidate word will be.

**S406** display the candidate words in real time based on the priority weights of the candidate words.

Based on the priority weights of the candidate words, the candidate words are ranked in descending order. The top five ranked candidate words will be respectively displayed in peripheral sectors of outer key zones a1, a2, a3, a7 and a8. In other words, the top five ranked candidate words will be respectively displayed in peripheral sectors b1, b2, b3, b7 and b8.

In addition, when the user intends to type a candidate word not in the top five ranked candidate words, the user may swipe from an outer key zone a9 towards a peripheral sector b9 of the outer key zone a9 so as to make a sixth-ranked candidate word, a seventh-ranked candidate word, a eighth-ranked candidate word, a ninth-ranked candidate word, and a tenth-ranked candidate word respectively displayed in the peripheral sector b1, the peripheral sector b2, the peripheral sector b3, the peripheral sector b7 and the peripheral sector b8. Other candidate words having relatively low priority weights can also be displayed in corresponding peripheral sectors through similar operations.

**S407** output a word selected by the user.

When the user swipes on the circular touch-sensitive keyboard to select a candidate word he intends to type, the selected candidate word will be output.

In operation, the typing method for the circular touch-sensitive keyboard in accordance with the fourth embodiment of the present invention comprises: detecting a user's touch data on the circular touch-sensitive keyboard to initiate a pre-input state based on the touch data; detecting the user's swipe input data on the circular touch-sensitive keyboard; judging whether a correction-and-prediction mode is turned on or not; if the correction-and-prediction mode is turned on, obtaining a character set corresponding to the swipe input data, the character set comprising characters and correction weighs of the characters corresponding to the swipe input data; seeking candidate words based on the characters in the character set, and obtaining usage-frequency weights of the candidate words; generating priority weights of the candidate words based on the usage-frequency weights of the candidate words and the correction weighs of the characters; after the candidate words are ranked in descending order based on the priority weights of the candidate words, displaying the candidate words in peripheral sectors b1, b2, b3, b7 and b8 in sequence; and finally outputting a selected candidate word selected by the user.

By way of example, referring to FIG. 15, when a user intends to type a word "going" and has already typed two characters "go", according to the usage-frequency weights of words, the top five ranked words starting with "go" are "got", "good", "goes", "gone" and "going".

After ascertaining that a correction-and-prediction mode is turned on, the top five ranked words "got", "good", "goes", "gone" and "going" starting with "go" are respectively displayed in peripheral sectors b1, b2, b3, b7 and b8. When the user touches an outer key zone a3, a character set {"u", "i", "o"} is obtained. When the user swipes his finger from the outer key zone a3 towards an inner key zone a5, the character "i" obtains a biggest correction weight. Because a character "t" is not within the character set {"u", "i", "o"}, the word "got" thus obtains an extremely low priority weight. The word "going", due to its relatively big usage-frequency weight and the biggest correction weight of the character "i", obtains a first-highest priority weight which is computed by multiplying together the correction weight of the character "i" and the usage-frequency weight of the word "going". The word "going-over", due to its relatively small usage-frequency weight and the biggest correction weight of the character "i", obtains a second-highest priority weight. The word "good" which does not start with "goi", due to its biggest usage-frequency weight and a relatively small correction weight of the character "o", obtains a third-highest priority weight. According to similar method, the word "goings" obtains a fourth-highest priority weight and the word "google" obtains a fifth-highest priority weight. So the top five ranked candidate words "going", "going-over", "good", "goings" and "google" are respectively displayed in the peripheral sectors b1, b2, b3, b7 and b8. During swiping from an outer key zone a1 towards the peripheral sector b1 to select the candidate word "going", the selected candidate word "going" is displayed in a color-inverted manner in an output window B1 when the user's finger or stylus is in still contact with the circular touch-sensitive keyboard. The selected candidate word "going" is then output once the user's finger or stylus is released from the circular touch-sensitive keyboard.

Referring to FIG. 5, FIG. 5 is a schematic illustration of a typing device for a circular touch-sensitive keyboard of the present invention.

Referring to FIG. 5, the typing device for a circular touch-sensitive keyboard comprises:
a pre-input module **1** for detecting a user's touch data on the circular touch-sensitive keyboard and initiating a pre-input state based on the touch data;
an input module **2,** connected to the pre-input module **1,** for detecting the user's swipe input data on the circular touch-sensitive keyboard;
a layout-and-mapping module **3,** connected to the input module **2,** for obtaining a character corresponding to the swipe input data; and
a first output module **5,** connected to the layout-and-mapping module **3,** for outputting the character.

Specifically, the typing device for a circular touch-sensitive keyboard comprises a pre-input module **1,** an input module **2,** a layout-and-mapping module **3** and a first output module **5,** wherein the input module **2** is connected to the pre-input module **1** and the layout-and-mapping module **3,** the layout-and-mapping module **3** is connected to the first output module **5.** The pre-input module **1** is used for detecting a user's touch data on the circular touch-sensitive keyboard and initiating a pre-input state based on the touch data. In the pre-input state, the touched key zone is highlighted, besides, characters corresponding to all swipe input operations starting from the touched key zone are highlighted so as to provide a visual indication of swipe directions to the user, each swipe direction starting from the touched key zone corresponding to a particular character. The input module **2** is used for detecting the user's swipe input data on the circular touch-sensitive keyboard and then delivering the swipe input data to the layout-and-mapping module **3,** wherein the swipe input data refers to a swipe path on the circular touch-sensitive keyboard. By comparing the swipe input data with a layout coordinate provided by the circular touch-sensitive keyboard, the layout-and-mapping module **3** obtains a character corresponding to the swipe input data. Finally, the first output module **5** outputs the character.

By way of example, referring to FIG. 13, when a user intends to type a character "g", the user firstly touches an inner key zone a5 on the circular touch-sensitive keyboard through his finger. The pre-input module **1** detects the user's touch data on the circular touch-sensitive keyboard and initiates a pre-input state in which the touched inner key zone a5 and eight characters corresponding to eight swipe input operations starting from the touched inner key zone a5 towards neighbouring outer key zones are highlighted. The user then swipes from the inner key zone a5 towards an outer key zone a2 through his finger or by using a stylus to produce swipe input data. The input module **2** detects the user's swipe input data on the circular touch-sensitive keyboard. The layout-and-mapping module **3** obtains a character "g" corresponding to the swipe input data. Finally, the first output module **5** outputs the character "g".

Preferably, the typing device for a circular touch-sensitive keyboard further comprises a first display module **4** for displaying the character, the first display module **4** being connected to the first output module **5** and the layout-and-mapping module **3.**

Specifically, the first display module **4** is connected to the first output module **5** and the layout-and-mapping module **3,** the layout-and-mapping module **3** obtains a character corresponding to swipe input data, the first display module **4** then displays the character in a color-inverted manner in an output window B1.

In operation, when using the typing device for a circular touch-sensitive keyboard to type character or symbol, a pre-input module **1** detects a user's touch data on the circular touch-sensitive keyboard and initiates a pre-input state in which the touched key zone and characters corresponding to all swipe input operations starting from the touched key zone are highlighted to provide a visual indication of swipe directions to the user, each swipe direction starting from the touched key zone corresponding to a particular character. Then an input module **2** detects the user's swipe input data on the circular touch-sensitive keyboard and deliveries the swipe input data to a layout-and-mapping module **3.** By comparing the swipe input data with a layout coordinate provided by the circular touch-sensitive keyboard, the layout-and-mapping module **3** obtains a character corresponding to the swipe input data. During swiping on the circular touch-sensitive keyboard through the user's finger, a first display module **4** displays the character in a color-inverted manner in an output window B1. Once the user's finger is released from the circular touch-sensitive keyboard, a first output module **5** outputs the character.

Preferably, the typing device for a circular touch-sensitive keyboard further comprises:
a judging module **6,** connected to the input module **2,** for judging whether a correction-and-prediction mode is turned on or not;
a correction-and-prediction module **7,** connected to the judging module **6,** for obtaining candidate words and priority weights of the candidate words corresponding to the swipe input data when the correction-and-prediction mode is turned on;
a second display module **8,** connected to the correction-and-prediction module **7,** for displaying the candidate words in real time based on the priority weights of the candidate words; and
a second output module **9,** connected to the second display module **8,** for outputting a word selected by the user.

Specifically, the judging module **6** is used for judging whether a correction-and-prediction mode is turned on or not; when the correction-and-prediction mode is turned on, the correction-and-prediction module **7** obtains candidate words and priority weights of the candidate words corresponding to the swipe input data; based on the priority weights of the candidate words, the second display module **8** displays the top five ranked candidate words in peripheral sectors b1, b2, b3, b7 and b8; the second output module **9** outputs a word selected by the user.

FIG. 6 shows a correction-and-prediction module **7** of a typing device for a circular touch-sensitive keyboard of the present invention.

Referring to FIG. 6, the correction-and-prediction module **7** comprises:
a correction module **71** for obtaining a character set corresponding to swipe input data, the character set comprising characters and correction weighs of the characters corresponding to the swipe input data;
a dictionary module **73** for seeking candidate words based on the characters in the character set and obtaining usage-frequency weights of the candidate words; and
a candidate module **72,** connected to the correction module **71** and the dictionary module **73,** for generating priority weights of the candidate words based on the usage-frequency weights of the candidate words and the correction weighs of the characters.

Specifically, the judging module **6** is used for judging whether a correction-and-prediction mode is turned on or not. When the correction-and-prediction mode is turned on, the correction module **71** obtains a character set corresponding to swipe input data, the character set comprising characters and correction weighs of the characters corresponding to the swipe input data. The correction weight of a particular character refers to the degree of closeness of the particular character to the correct character that a user intends to type, said degree of closeness of the particular character assigned to a touched key zone is expressed as a percentage which is determined by comparing the distances from the terminal point of the swipe path to midpoints of other 8 key zones. The shorter the distance from the terminal point to the midpoint of a particular key zone is, the bigger the correction weight of a particular character corresponding to a swipe input operation from the touched key zone towards the particular key zone will be. The dictionary module **73** comprises a word database and a word usage-frequency database, the dictionary module **73** seeks in the word database and word usage-frequency database for candidate words based on the character set and characters that have already been typed, predicts candidate words that the user is likely to type, and obtains usage-frequency weights from the word usage-frequency database for the candidate words. The candidate module **72** is connected to the correction module **71** and the dictionary module **73,** the candidate module **72** multiplies together the correction weight of the character and the usage-frequency weight of the candidate word to generate a priority weight of the candidate word.

By way of example, referring to FIG. 15, when a user intends to type a word "going" and has already typed two characters "go", (according to the usage-frequency weights of words, the top five ranked words starting with "go" are "got", "good", "goes", "gone" and "going"). After the user has typed two characters "go", the judging module **6** judges whether a correction-and-prediction mode is turned on or not. If the correction-and-prediction mode is ascertained to be turned on, the dictionary module **73** seeks out the top five ranked words "got", "good", "goes", "gone" and "going" starting with "go", then the words "got", "good", "goes", "gone" and "going" are respectively displayed in peripheral sectors b1, b2, b3, b7 and b8. As the user touches an outer key zone a3, the correction module **71** obtains a character set {"u", "i", "o"}. When the user swipes his finger from an outer key zone a3 towards an inner key zone a5, the character "i" obtains a biggest correction weight. Because a character "t" is not within the character set {"u", "i", "o"}, the word "got" thus obtains an extremely low priority weight. The word "going", due to its relatively big usage-frequency weight and the biggest correction weight of the character "i", obtains a first-highest priority weight which is computed by multiplying together the correction weight of the character "i" and the usage-frequency weight of the word "going". The word "going-over", due to its relatively small usage-frequency weight and the biggest correction weight of the character "i", obtains a second-highest priority weight. The word "good" which does not start with "goi", due to its biggest usage-frequency weight and a relatively small correction weight of the character "o", obtains a third-highest priority weight. According to similar method, the word "goings" obtains a fourth-highest priority weight and the word "google" obtains a fifth-highest priority weight. So the top five ranked candidate words are "going", "going-over", "good", "goings" and "google".

The second display module **8** displays the candidate words "going", "going-on", "good", "goings" and "google" respectively in peripheral sectors b1, b2, b3, b7 and b8. During swiping from an outer key zone a1 towards the peripheral sector b1 to select the candidate word "going", the second display module **8** displays the selected candidate word "going" in a color-inverted manner in an output window B1 when the user's finger or stylus is in still contact with the circular touch-sensitive keyboard. The second output module **9** finally outputs the selected candidate word "going" once the user's finger or stylus is released from the circular touch-sensitive keyboard.

In addition, the judging module **6** judges whether a correction-and-prediction mode is turned on or not. When the correction-and-prediction mode is turned on, the correction module **71** obtains a character set corresponding to swipe input data, the character set comprising characters and correction weighs of the characters corresponding to the swipe input data. Based on the character set and characters that have already been typed, the dictionary module **73** obtains candidate words and usage-frequency weights of the candidate words. For each of the candidate words, the candidate module **72** multiplies together the usage-frequency weight of the candidate word and corresponding correction weight of the character to generate a priority weight of the candidate word. Based on the priority weights of the candidate words, the second display module **8** ranks the candidate words in descending order and displays the top five ranked candidate words in peripheral sectors b1, b2, b3, b7 and b8. The user may swipe on the circular touch-sensitive keyboard to select the candidate word he intends to type.

During swiping from an outer key a1 towards the peripheral sector b1 to select the candidate word, the second display module **8** displays the candidate word displayed in the peripheral sector b1 in a color-inverted manner in an output window B1 when the user's finger or stylus is in still contact with the circular touch-sensitive keyboard. The second output module **9** finally outputs the selected candidate word once the user's finger or stylus is released from the circular touch-sensitive keyboard. Similarly, during selecting a candidate word in the peripheral sector b2, b3, b7 or b8, the second display module **8** displays a corresponding candidate word in a color-inverted manner in an output window B1 when the user's finger or stylus is in still contact with the circular touch-sensitive keyboard. The second output module **9** finally outputs the selected candidate word once the user's finger or stylus is released from the circular touch-sensitive keyboard.

All the above are the preferred embodiments of the present invention, and the invention is intended to cover various modifications and equivalent arrangements included within the scope of the invention.

## Claims

1. A typing method for a circular touch-sensitive keyboard, **characterized in that** the typing method comprises:
detecting (S100, S200, S300, S400) a user's touch data on the circular touch-sensitive keyboard to initiate a pre-input state based on the touch data;
detecting (S101, S201, S301, S401) the user's swipe input data on the circular touch-sensitive keyboard;
obtaining (S102, S202, S402) a character corresponding to the swipe input data; and
outputting (S104, S204) the character;
wherein the circular touch-sensitive keyboard comprises an inner key zone (a5) and an outer key area (A1), the outer key area (A1) comprises eight outer key zones (a1, a2, a3, a7, a8), the inner key zone (a5) comprises eight sectors, each outer key zone (a1, a2, a3, a7, a8) comprises four sectors, each sector is assigned with a particular character, the circular touch-sensitive keyboard is provided with an input module (2) for detecting the swipe input data on the inner key zone (a5) and outer key zones (a1, a2, a3, a7, a8) of the circular touch-sensitive keyboard.

2. The typing method according to claim 1, **characterized in that** the typing method further comprises the following steps after the step of detecting the user's swipe input data on the circular touch-sensitive keyboard:
judging (S302, S402) whether a correction-and-prediction mode is turned on or not;
obtaining (S303) candidate words and priority weights of the candidate words corresponding to the swipe input data when the correction-and-prediction mode is turned on;
displaying (S304, 406) the candidate words in real time based on the priority weights of the candidate words; and
outputting (S305, S407) a word selected by the user.

3. The typing method according to claim 1, **characterized in that** the step of obtaining candidate words and priority weights of the candidate words corresponding to the swipe input data when the correction-and-prediction mode is turned on comprises:
obtaining (S403) a character set corresponding to the swipe input data, the character set comprising characters and correction weighs of the characters corresponding to the swipe input data;
seeking (S404) the candidate words based on the characters in the character set,
obtaining usage-frequency weights of the candidate words; and
generating (S405) the priority weights of the candidate words based on the usage-frequency weights of the candidate words and the correction weighs of the characters.

4. The typing method according to claim 1, **characterized in that** the typing method further comprises the following step after the step of obtaining the character corresponding to the swipe input data:
displaying (S203) the character.

5. A typing device for a circular touch-sensitive keyboard, comprising:
a pre-input module (1), the pre-input module (1) detecting a user's touch data on the circular touch-sensitive keyboard and initiating a pre-input state based on the touch data;
an input module (2) connected to the pre-input module (1), the input module (2) detecting the user's swipe input data on the circular touch-sensitive keyboard;
a layout-and-mapping module (3) connected to the input module, the layout-and-mapping module (3) obtaining a character corresponding to the swipe input data; and
a first output module (5) connected to the layout-and-mapping module (3), the first output module (5) outputting the character.

6. The typing device according to claim 5, **characterized in that** the typing device further comprises:
a judging module (6) connected to the input module, the judging module (6) judging whether a correction-and-prediction mode is turned on or not;
a correction-and-prediction module (7) connected to the judging module (6), the correction-and-prediction module (7) obtaining candidate words and priority weights of the candidate words corresponding to the swipe input data when the correction-and-prediction mode is turned on;
a second display module (8) connected to the correction-and-prediction module (7), the second display module (8) displaying the candidate words in real time based on the priority weights of the candidate words; and
a second output module (9) connected to the second display module, the second output module outputting a word selected by the user.

7. The typing device according to claim 5, **characterized in that** the correction-and-prediction (7) module comprises:
a correction module (71), the correction module obtaining a character set corresponding to the swipe input data, the character set comprising characters and correction weighs of the characters corresponding to the swipe input data;
a dictionary module (73), the dictionary module seeking the candidate words based on the characters in the character set and obtaining usage-frequency weights of the candidate words; and
a candidate module (72) connected to the correction module and the dictionary module,
the candidate module generating the priority weights of the candidate words based on the usage-frequency weights of the candidate words and the correction weighs of the characters.

8. The typing device according to claim 5, **characterized in that** the typing device further comprises:
a first display module (4) connected to the first output module (5) and the layout-and-mapping module (3), the first display module (4) displaying the character.
